# EUROPÄISCHE PATENTSCHRIFT

(11) **EP 0 937 287 B1**
(45) Veröffentlichungstag und Bekanntmachung des Hinweises auf die Patenterteilung: **05.12.2001**
(21) Anmeldenummer: 97909177.4
(22) Anmeldetag: 23.09.1997
(51) Int. Cl.: G06F 11/22

(54) **LAGEBESTIMMUNG VON PERIPHERIEEINHEITEN**
POSITION INDICATION CONCERNING PERIPHERAL UNITS
INDICATION DE POSITION D'UNITES PERIPHERIQUES

(30) Priorität: 08.11.1996 DE 19646155
(43) Veröffentlichungstag der Anmeldung: 25.08.1999
(73) Patentinhaber: Fujitsu Siemens Computers GmbH, 81739 München (DE)
(72) Erfinder: DROOP, Jürgen, D-33330 Gütersloh (DE); HARASTA, Reinhard, D-33106 Paderborn (DE)
(74) Vertreter: Epping, Wilhelm, Dipl.-Ing.
(86) Internationale Anmeldenummer: DE9702155
(87) Internationale Veröffentlichungsnummer: WO9821658

(56) Entgegenhaltungen:
- EP-A- 0 209 923
- EP-A- 0 308 043
- GB-A- 2 202 062
- US-A- 5 511 227

## Beschreibung

### Technisches Gebiet

Die Anordnung bzw. das Verfahren betreffen die Ermittlung der Lage von Peripherieeinheiten in Rechnersystemen.

### Stand der Technik

In kleineren Rechnersystemen ist die Anzahl der gleichartigen Komponenten gering, so daß bei Problemen mit einer dieser Komponenten diese leicht aufgefunden und beispielsweise ausgetauscht werden kann.

In Hochleistungssystemen werden für Peripheriegeräte, insbesondere für Magnetplatten, häufig eine große Zahl gleichartiger Laufwerke eingesetzt, die wegen der hohen Stückzahlen für kleine und mittlere Systeme bewährt und preiswert sind. Die Laufwerke werden bei den Hochleistungssystemen häufig in eigenen Gehäusen angeordnet, wobei teilweise diese sogar durch Brandschutzwände abgetrennt sind.

Um eine hohe Gesamtleistung zu erreichen, wird eine Vielzahl von getrennten Steuereinheiten, an die die Laufwerke, meist über einen SCSI-Bus, angeschlossen sind, verwendet. Wenn beispielsweise die Adressen der Steuereinheiten beim Systemanlauf dynamisch vergeben werden, dann ist bei einem Ausfall eines Plattenlaufwerks nicht klar, wo dieses Laufwerk zu orten ist. Auch wenn die Adressen manuell durch einen Techniker während der Installation vergeben und handschriftlich festgehalten werden, ist eine durch den Rechner überprüfbare Lokalisierung wünschenswert.

Aufgabe der Erfindung ist es daher, eine Anordnung und ein Betriebsverfahren anzugeben, mit dem die Lage von Peripherie-Geräten in einem Rechensystem ermittelt werden kann.

Das Dokument EP-A-308403 offenbart eine Vorrichtung, in der die Peripherieeinheiten selbst eine eindeutige Markierung enthalten, und diese Markierung kann von der Zentraleinheit über einen separaten Bus ausgzlesen werden.

### Darstellung der Erfindung

Die Erfindung, die in den unabhängigen Ansprüchen 1 und 8 definiert wird, benutzt ein zweites, für Diagnosezwecke vorhandenes Nachrichtensystem, das über eine ortsbezogene Adressierung verfügt. Dieses Nachrichtensystem überwacht die Peripheriegeräte auf einen bestimmten Betriebszustand und speichert dessen Auftreten in einem Merker. Eine Kopplung des Diagnosesystems mit dem Rechner und seinem Betriebssystem erlaubt es, daß Software des Betriebssysstems den bestimmten Betriebszustand herbeiführt, die Merker abfragt und aus der Adresse des Merkers auf die Lage des Peripheriegerätes schließen kann.

Es handelt sich also um eine Anordnung und ein Betriebsverfahren zur Bestimmung der Lage eines Peripheriesystems in einem Rechnersystem, bei dem eine vorbestimmte Operation des Peripheriesystems einen Merker in einem Diagnosesystem setzt, der abfragbar ist und über dessen Adresse die Lage bestimmt wird.

### Kurzbeschreibung der Zeichnungen

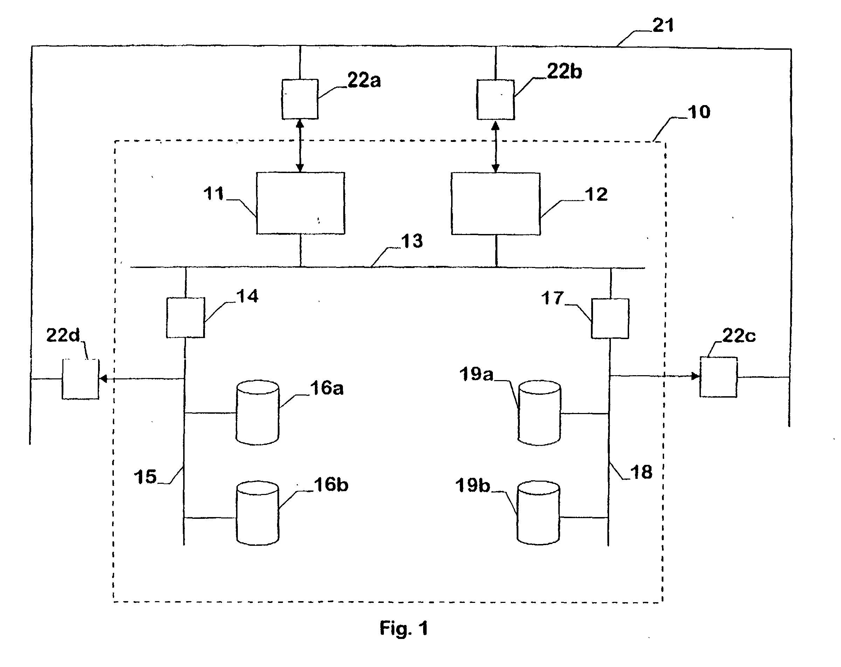

Es zeigt
- Fig. 1: ein Blockschaltbild eines Rechnersystems mit einem Diagnosesystem.

### Detaillierte Beschreibung der Erfindung

Fig. 1 zeigt ein Blockschaltbild eines Rechnersystems, in dem die Erfindung verwendet werden kann. Der produktive Teil des Rechnersystems ist durch einen gestrichelten Rahmen 10 angedeutet. Er umfaßt beispielsweise eine Zentraleinheit 11, einen Speicher 12, ein Zentral-Bussystem 13 und Peripheriesteuereinheiten 14, 17, die ihrerseits je einen Peripheriebus 15, 18 bedienen, an den Peripheriegeräte 16a, 16b, 19a, 19b angeschlossen sind. Das Zentral-Bus-system kann beispielsweise ein Hochleistungs-Bussystem, z.B. ein PCI-Bus, ein VME-Bus oder ein anderes vergleichbares Bussystem sein. Die Bussysteme 15, 18 für die Peripheriegeräte sind vorzugsweise als SCSI-Bus ausgeführt.

Zusätzlich zu den hier als produktiven Teil 10 bezeichneten Einrichtungen ist ferner ein Test- und Diagnosesystem vorhanden, das aus einer Anzahl von Einheiten 22a..d besteht, die vorzugsweise über ein Bussystem 21 miteinander verbunden sind. Während das Zentral-Bussystem und die Peripheriebussysteme auf maximalen Durchsatz ausgelegt sind, ist das Bussystem auf einfache Verdrahtung, d.h. wenige Leitungsadern, und einfachen und zuverlässigen Betrieb ausgelegt. Beispiele für solche Bussysteme sind der IIC-Bus und der CAN-Bus.

In der Fig. 1 sind vier Einheiten 22a, 22b, 22c und 22d dargestellt, von denen eine Einheit 22a mit der Zentraleinheit 11 und eine andere Einheit 22b mit dem Speicher 12verbunden ist. Dies ist durch Doppelpfeile angedeutet. Diese Diagnoseinheiten übernehmen Test- und Koordinierungsfunktion während der Einschaltphase des Systems und sind im laufenden Betrieb weiterhin verwendbar, sei es auch nur, um ein geordnetes Ausschalten sicherzustellen. Die Doppelpfeile symbolisieren, daß ein Datenaustausch in beiden Richtungen vorgesehen ist.

Zwei weitere Einheiten 22c, 22d sind unter anderem mit den Peripherie-Bussystemen 15, 18 derart verbunden, daß ein vorbestimmter, vorzugsweise kontextfrei erkennbarer, von der Zentraleinheit 11 bewirkbarer Zustand des Peripherie-Bussystems erkennbar und in einem nicht dargestellten Merker in der Einheit 22c gespeichert wird. Diese Abfrage ist in der Fig. 1 durch einen einfachen Pfeil symbolisiert. Als Zustand wird bevorzugt der Rücksetz-Zustand verwendet, weil dieser einfach und kontextfrei erkennbar ist und während der Anlaufphase oder bei Problemen mit den Peripheriegeräten ohnehin abzusetzen ist.

Daher sendet das Betriebssystem in der Zentraleinheit 11 zunächst ein Nachricht an die ihm zugeordnete Einheit 22a, woraufhin diese alle Merker in den Einheiten 22c, 22d zurücksetzt und den Abschluß dieser Operation quittiert. Anschließend führt das Betriebssystem eine Rücksetz-Operation für das Bussystem aus, dessen Lage bestimmt werden soll. Hierauf erfolgt eine Anfrage an die Einheit 22a, welcher Merker nunmehr gesetzt sei, was die Einheit 22a durch Nachfrage bei allen möglichen Einheiten 22c, 22d ermittelt. Ist es die Einheit 22c, so ist es der rechte Bus 18; ist es die Einheit 22d, so ist es der linke Bus 15.

Selbst wenn die Zentraleinheit in einer Tabelle einen Lageangabe für den betroffenen Peripheriebus hat, so stellt die Erfindung sicher, daß diese Angabe überprüfbar ist.

Anstatt das Bussystem abzufragen, kann auch jedes Gerät mit den Einheiten des Diagnosesystems verbunden sein, wobei der Einbauplatz über den gesetzten Merker entscheidet. Wird zusätzlich das Bussystem auf z.B. einen Reset überwacht, dann wirkt die Erkennung des Reset als Freigabesignal. Eine nachfolgende Adressierung eines Geräts setzt den dem Einbauplatz zugeordneten Merker und erlaubt damit eine Zuordnung von logischer Adresse zu dem tatsächlichen Einbauplatz.

## Patentansprüche

1. Anordnung zur Bestimmung der Lage von Peripherieeinheiten (14, 15, 16a, 16b, 17, 18, 19a, 19b) in einem Rechnersystem, *umfassend ein auf einer Zentraleinheit ablaufendes Betriebsprogramm,* mit den Merkmalen:
- das Rechnersystem umfaßt *ferner* ein Diagnossystem mit adressierbaren Diagnoseeinheiten (22a..d),
* die über eigene Datenkommunikationsmitttel (21) untereinander *und mit dem Betriebssystem* verbunden sind und
* eindeutige, die Lage kennzeichnende Adressen besitzen, wobei über eine Zuordnungseinheit die Lage aus der Adresse bestimmbar ist;
- die Peripherieeinheiten *sind* an das Diagnosesystem derart angeschlossen, daß
* jeder der Peripherieeinheiten in eindeutiger Weise ein Merker in einer Diagnoseeinheit zugeordnet ist, der über das Diagnosesystem abgefragt und zurückgesetzt werden kann,
* ein vorbestimmter Zustand der Periperieeinheit *den zugeordneten* Merker in der *zugeordneten* Diagnoseeinheit setzt,
* das Betriebsprogramm mittels einer vorbestimmten Operation den vorbestimmten Zustand der Peripherieeinheit erzeugt und des gesetzten Merkers die Diagnoseeinheit ermittelt und damit die Lage der Peripherieeinheit bestimmt.

2. Anordnung nach Anspruch 1, wobei die vorbestimmte Operation eine Rücksetz-Operation ist.

3. Anordnung nach Anspruch 1, wobei mehrere Peripherieeinheiten (16a, 16b, 19a, 19b) einer weiteren Peripherieeinheit (14, 15, 17, 18) untergeordnet sind und der der weiteren Peripherieeinheit zugeordnete Merker eine Freigabe der Merker für die mehreren Peripherieinheiten bewirkt.

4. Anordnung nach Anspruch 3 , wobei die weitere Peripherieeinheit (17, 18) ein Peripheriebus ist.

5. Anordnung nach Anspruch 3, wobei die vorbestimmte Operation für die weitere Peripherieeinheit (14, 17) eine Rücksetzoperation und für die mehereren Peripherieeinheiten (16a, 16b, 19a, 19b) eine Adressierungsoperation ist.

6. Anordnung nach einem der Ansprüche 1 bis 5, wobei das Datenkommmunikationsmittel (21) der Diagnoseeinheiten ein Bussystem ist.

7. Anordnung nach einem der vorherigen Ansprüche, wobei für die Peripherieeinheiten ein SCSI-Bussystem verwendet wird, dessen einer Zustand den Merker in der Diagnoseeinheit setzt.

8. Betriebsverfahren zur Bestimmung der Lage von Peripherieeinheiten (14, 15, 16a, 16b, 17, 18, 19a, 19b) in einem Rechnersystem, umfassend ein auf einer Zen traleinheit ablaufendes Betriebsprogramm, mit den Merkmalen:
- das Rechnersystem umfaßt ferner ein Diagnossystem mit adressierbaren Diagnoseeinheiten (22a..d),
* die über eigene Datenkommunikationsmitttel (21) untereinander und mit dem Betriebssystem verbunden sind und
* eindeutige, die Lage kennzeichnende Adressen besitzen, wobei über eine Zuordnungseinheit die Lage aus der Adresse bestimmbar ist;
- die Peripherieeinheiten sind an das Diagnosesystem derart angeschlossen, daß
* jeder der Peripherieeinheiten in eindeutiger weise ein Merker in einer Diagnoseeinheit zugeordnet ist, der über das Diagnosesystem abgefragt und zurückgesetzt werden kann,
* ein vorbestimmter Zustand der Periperieeinheit den zugeordneten Merker in der zugeordneten Diagnoseeinheit setzt,
mit den Schritten, daß
* das Diagnosesystem alle Peripherieeinheiten zugeornete Merker löscht,
* das Betriebsprogramm mittels einer vorbestimmten Operation den vorbestimmten Zustand der Peripherieeinheit erzeugt, deren Lage zu bestimmen ist,
* Merker des Diagnosesystems abfragt, bis ein gesetzter Merker gefunden ist,
* und mit der Adresse des Merkers mittels der Zuornungseinheit die räumliche Lage der Peripherieeinheit bestimmt wird.

## Claims

1. Arrangement for determining the position of peripheral units (14, 15, 16a, 16b, 17, 18, 19a, 19b) in a computer system which includes an operating program running on a central unit and has the features:
- the computer system also includes a diagnostic system with addressable diagnostic units (22a..d),
* which are connected to each other and to the operating system via separate data communication means (21) and
* have unique addresses indicating the position, it being possible to determine the position from the address by means of an allocation unit;
- the peripheral units are connected to the diagnostic system in such a way that
* a marker in a diagnostic unit is uniquely assigned to each of the peripheral units, which marker can be queried and reset via the diagnostic system,
* a predetermined state of the peripheral unit sets the assigned marker in the assigned diagnostic unit,
* the operating program generates the predetermined state of the peripheral unit by means of a predetermined operation and determines the diagnostic unit by means of the set marker, and hence determines the position of the peripheral unit.

2. Arrangement according to Claim 1, wherein the predetermined operation is a reset operation.

3. Arrangement according to Claim 1, wherein a plurality of peripheral units (16a, 16b, 19a, 19b) are subordinate to a further peripheral unit (14, 15, 17, 18) and the marker assigned to the further peripheral unit causes the markers for the plurality of peripheral units to be released.

4. Arrangement according to Claim 3, wherein the further peripheral unit (17, 18) is a peripheral bus.

5. Arrangement according to Claim 3, wherein the predetermined operation is a reset operation for the further peripheral unit (14, 17) and an addressing operation for the plurality of peripheral units (16a, 16b, 19a, 19b).

6. Arrangement according to one of Claims 1 to 5, wherein the data communication means (21) of the diagnostic units is a bus system.

7. Arrangement according to one of the preceding claims, wherein a SCSI bus system is used for the peripheral units and one state of said bus system sets the marker in the diagnostic unit.

8. Operating method for determining the position of peripheral units (14, 15, 16a, 16b, 17, 18, 19a, 19b) in a computer system which includes an operating program running on a central unit and has the features:
- the computer system also includes a diagnostic system with addressable diagnostic units (22a..d),
* which are connected to each other and to the operating system via separate data communication means (21) and
* have unique addresses indicating the position, it being possible to determine the position from the address by means of an allocation unit;
- the peripheral units are connected to the diagnostic system in such a way that
* a marker in a diagnostic unit is uniquely assigned to each of the peripheral units, which marker can be queried and reset via the diagnostic system,
* a predetermined state of the peripheral unit sets the assigned marker in the assigned diagnostic unit,
having the following steps:
* the diagnostic system deletes all markers assigned to peripheral units,
* by means of a predetermined operation, the operating program generates the predetermined state of the peripheral unit whose position is to be determined,
* markers of the diagnostic system are queried until a set marker is found,
* and the spatial position of the peripheral unit is determined using the address of the marker by means of the allocation unit.

## Revendications

1. Dispositif pour déterminer la position d'unités (14, 15, 16a, 16b, 17, 18, 19a, 19b) périphériques dans un système d'ordinateur, comportant un programme d'exploitation se déroulant sur une unité centrale, comportant les dispositions :
- le système d'ordinateur comprend de plus un système de diagnostic à unités (22a...d) de diagnostic pouvant être adressées,
* qui sont reliées par l'intermédiaire de moyens (21) propres de communication de données les unes aux autres et au système d'exploitation et
* qui possèdent des adresses non équivoques, caractérisant la position, la position pouvant être déterminée à partir de l'adresse par l'intermédiaire d'une unité d'association ;
- les unités périphériques sont raccordées au système de diagnostic de telle manière que
* il est associé à chacune des unités périphériques, de manière non équivoque, un indicateur dans une unité de diagnostic qui peut être interrogé par l'intermédiaire du système de diagnostic et qui peut être remis à l'état initial,
* un état prédéterminé de l'unité périphérique mettant l'indicateur associé dans l'unité de diagnostic associée,
* le programme d'exploitation produit au moyen d'une opération prédéterminée l'état prédéterminé de l'unité périphérique et détermine au moyen de l'indicateur mis l'unité de diagnostic et détermine ainsi la position de l'unité périphérique.

2. Dispositif suivant la revendication 1, l'opération prédéterminée étant une opération de remise à l'état initial.

3. Dispositif suivant la revendication 1, plusieurs unités (16a, 16b, 19a, 19b) périphériques étant subordonnées à une unité (14, 15, 17, 18) périphérique supplémentaire et l'indicateur associé à l'unité périphérique supplémentaire provoquant une libération de l'indicateur pour les plusieurs unités périphériques.

4. Dispositif suivant la revendication 3, l'unité (17, 18) périphérique étant un bus périphérique.

5. Dispositif suivant la revendication 3, l'opération prédéterminée pour l'unité (14, 17) périphérique supplémentaire étant une opération de remise à l'état initial et pour les plusieurs unités (16a, 16b, 19a, 19b) périphériques une opération d'adressage.

6. Dispositif suivant l'une des revendications 1 à 5, le moyen (21) de communication de données des unités de diagnostic étant un système de bus.

7. Dispositif suivant l'une des revendications précédentes, un système de bus SCSI dont un état met l'indicateur dans l'unité de diagnostic étant utilisé pour les unités périphériques.

8. Procédé d'exploitation pour déterminer la position d'unités (14, 15, 16a, 16b, 17, 18, 19a, 19b) périphériques dans un système d'ordinateur, comportant un programme d'exploitation se déroulant sur une unité centrale, comportant les dispositions :
- le système d'ordinateur comprend de plus un système de diagnostic comportant des unités (22a...d) de diagnostic pouvant être adressées,
* qui sont reliées par l'intermédiaire de moyens (21) propres de communication de données les unes aux autres et au système d'exploitation et
* qui possèdent des adresses non équivoques, caractérisant la position, la position pouvant être déterminée à partir de l'adresse par l'intermédiaire d'une unité d'association ;
- les unités périphériques sont raccordées au système de diagnostic de telle manière que
* il est associé à chacune des unités périphériques, de manière non équivoque, un indicateur dans une unité de diagnostic qui peut être interrogé et remis à l'état initial par l'intermédiaire du système de diagnostic,
* un état prédéterminé de l'unité périphérique mettant l'indicateur associé dans l'unité de diagnostic associée,
comportant les étapes qui consistent en ce que
* le système de diagnostic efface tous les indicateurs associés à des unités périphériques,
* le programme d'exploitation produit au moyen d'une opération prédéterminée l'état prédéterminé de l'unité périphérique dont la position est à déterminer,
* on interroge des indicateurs du système de diagnostic jusqu'à ce qu'un indicateur mis soit trouvé, et
- on détermine par l'adresse de l'indicateur, au moyen de l'unité d'association, la position dans l'espace de l'unité périphérique.
